# EUROPEAN PATENT APPLICATION

(11) **EP 1 312 586 A1**
(43) Date of publication of application: **21.05.2003**
(21) Application number: 02257650.8
(22) Date of filing: 05.11.2002
(51) Int. Cl.: C03C 17/34, G02B 1/11

(54) **Optical coating for UV applications**

(30) Priority: 09.11.2001 JP 2001344544
(71) Applicant: CANON KABUSHIKI KAISHA, Tokyo (JP)
(72) Inventor: Fukumoto, Eri, Moriya-shi, Ibaraki-ken (JP); Aoki, Tomonori, Yuki-shi, Ibaraki-ken (JP)
(74) Representative: Beresford, Keith Denis Lewis

(57) **Abstract**

In order to provide an optical element having an optical thin film free of cracking or peeling, with excellent durability, the optical thin film is constructed of a layer containing a fluoride of lanthanoid.

## Description

The present invention relates to a thin film and a manufacturing method thereof, and more particularly, to an optical thin film used for optical elements such as a mirror and lens (e.g., antireflection coat used with a wavelength of 250 nm or less).

When a thin film is created, the thin film deforms a substrate because of its own properties. This is called "generation of stress." Overlaying many substances having the same type of stress one atop another on the substrate increases deformation of the substrate and the stress of the thin film itself may cause destruction of the thin film itself. Stress causing a thin film to warp outward with respect to the substrate is defined as "compression stress" and stress causing a thin film to warp inward with respect to the substrate is defined as "tensile stress." Conventionally, TiO₂, Ta₂O₅, ZrO₂, Al₂O₃ and MgF₂, etc. are known as substances exhibiting tensile stress, while only SiO₂ is known as a substance exhibiting compression stress.

Moreover, when a multi-layer film is formed by combining high refractive index materials and low refractive index materials, TiO₂, Ta₂O₅, ZrO₂, Al₂O₃, etc. are conventionally used as high refractive index materials, while SiO₂ and MgF₂, etc. are used as low refractive index materials.

Therefore, when a multi-layer film is formed by combining high refractive index materials and low refractive index materials, high refractive index materials and low refractive index materials may be combined in such a way that stress orientations are opposite to one another to reduce the stress and demonstrate satisfactory optical characteristics. However, there is no choice other than using SiO₂ as low refractive index materials for conventionally known thin film materials and manufacturing methods thereof.

A demand for optical thin films used for light in a vacuum ultraviolet region (wavelength of 250 nm or less) is growing in recent years. However, the above described high refractive index materials except Al₂O₃ have almost no transparency for light in the vacuum ultraviolet region. Moreover, though MgF₂ and SiO₂ can be used as low refractive index materials, transmittance of an SiO₂ film drops drastically for light of wavelength of 190 nm or less. For this reason, when a thin film to be used for light in the vacuum ultraviolet region is to be created, Al₂O₃ should be used for a high refractive index material and MgF₂ should be used for a low refractive index material according to the conventionally known combinations of materials. However, all these materials are substances exhibiting tensile stress and have therefore the same stress orientation, producing a problem in creating a durable thin film.

That is, as mentioned above, most of conventionally used thin film materials are substances whose stress state after formation of the film is tensile stress, and only SiO₂ exhibits compression stress. Therefore, when high refractive index thin films and low refractive index thin films other than SiO₂ are laminated one atop another, the stress on the entire thin film becomes large tensile stress, which would cause cracking or peeling of thin films.

Thus, in order to address the above described problems, it is an illustrative object of the present invention, when an optical thin film is formed by laminating high refractive index thin film materials and low refractive index thin film materials, to provide an optical thin film which may be capable of balancing stress for the entire thin film, with little cracking or peeling of the thin film and may have excellent durability, manufacturing method thereof, optical element having the above described optical thin film, optical system, image pickup device, recording device and exposure device provided with the above described optical system.

The optical element and the manufacturing method thereof according to the present invention are characterized by having the following main configuration.

That is, the present invention provides an optical element comprising a substrate and a thin film formed on the substrate, wherein the thin film includes a layer containing a fluoride of lanthanoid and a layer containing a fluoride of other than lanthanoid.

Furthermore, the present invention provides an optical element manufacturing method comprising a step of providing a substrate and a step of forming a thin film on the substrate, wherein the step of forming a thin film includes a step of forming a layer containing a fluoride of lanthanoid and a step of forming a layer containing a fluoride of other than lanthanoid.

These and other objects, advantages, and features will be readily apparent in view of the following detailed description of embodiments of the present invention, which are described by way of example only, with reference to the accompanying drawings in which:
FIG. 1 is a schematic view showing an example of a vacuum evaporator used in an embodiment of the present invention;
FIG. 2 is a schematic view showing an example of an optical element according to an embodiment of the present invention;
FIG. 3 illustrates an example of an exposure device according to an embodiment of the present invention;
FIG. 4 illustrates an example of a manufacturing flow of a device according to an embodiment of the present invention; and
FIG. 5 illustrates the wafer process in FIG. 4.

The present inventor et al. have noticed LaF₃ and GdF₃ whose refractive indices of light of a wavelength close to 200 nm in a vacuum ultraviolet region are approximately 1.66 and 1.68, respectively and investigated stress characteristics of these materials in detail. As a result, control over thickness and deposition speed of a thin film and mutual cancellation of stress in their combination with MgF₂ came to fruition as a thin film almost free of influences of stress on the substrate, free of cracking and peeling.

That is, the embodiments of the present invention use fluorides of lanthanoid such as GdF₃ and LaF₃ as high refractive index materials, uses substances having a tensile stress characteristic such as MgF₂, etc. as low refractive index materials, combines those high refractive index substances and low refractive index substances, strictly controls the film formation speed and film thickness of both substances, and thereby provides a thin film with less stress.

More specifically, GdF₃ or LaF₃ as a high refractive index material is formed on the substrate preferably at a deposition speed of 15Å/s or less or most preferably at 5Å/s or less, and then the thickness of those thin films is preferably 600Å or less.

Furthermore, the multi-layer film of the present invention is preferably created using a vacuum deposition method whereby the vapor deposition materials are melted and evaporated. Furthermore, the multi-layer film is implemented by alternately laminating vapor deposition materials one atop another on the substrate on which the thin film is created.

Since it is necessary to control the film thickness and film formation speed during film formation, it is desirable to use a vapor deposition source capable of precisely controlling the output and an electron gun dissolution method, resistance heating method and high frequency induction heating method, etc. are suitable.

Furthermore, it is preferable to provide an optical or crystalline film thickness monitor to control film thickness. A source substance for the substances formed as a thin film is called a "vapor deposition material." For GdF₃, LaF₃ and MgF₂ which are vapor deposition materials of embodiments of the present invention, a sintered body made of sintered and solidified powder, single crystal, granules resulting from a crushed single crystal, etc. are used. The type of the substrate on which a thin film is formed according to an embodiment of the present invention is not particularly limited, but quartz or fluorite can also be used. Furthermore, the formed thin film can also be used as an antireflection film for vacuum ultraviolet rays, incremental reflector film or optical thin film to let specific wavelengths pass such as a filter.

Furthermore, by combining the optical thin film based on the present invention with other thin films, it is also possible to reduce stress of the entire thin film and obtain an optical thin film with excellent durability.

Preferred embodiments of the present invention will now be described in detail in accordance with the accompanying drawings.

### [Example 1]

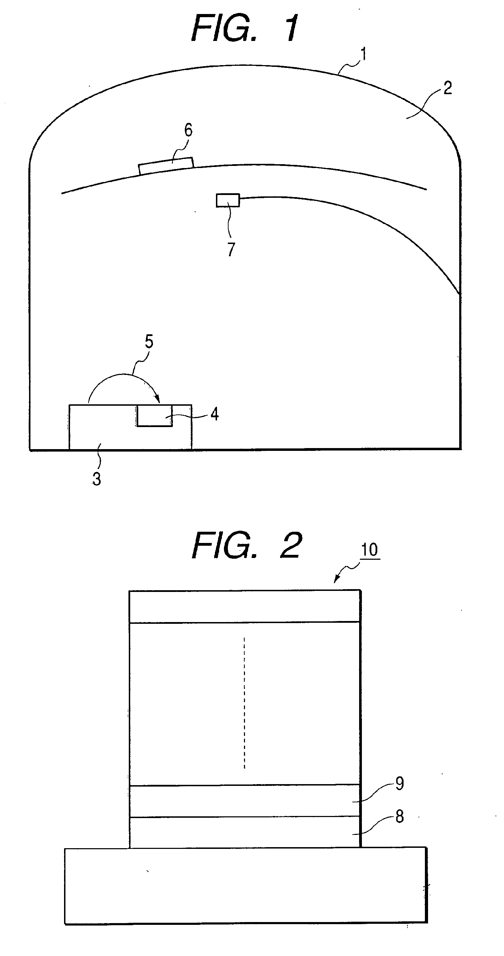

In manufacturing the optical thin film of Example 1, a vacuum evaporator shown in FIG. 1 is used. In FIG. 1, reference numeral 1 denotes a vacuum evaporator, 2 denotes a vacuum tank, 3 denotes an electron gun, 4 denotes an electron beam vapor deposition hearth, 5 denotes an electron beam, 6 denotes a substrate and 7 denotes a crystal oscillator (film thickness monitor).

When an optical thin film was manufactured using this apparatus, the quartz substrate 6 of 30 mm in diameter and 0.5 mm in thickness was placed in a dome in the vacuum evaporator in FIG. 1 (BMC800 manufactured by SHINCRON) as a monitor substrate for observation of stress and the thin film.

Then, the electron beam vapor deposition hearth 4 placed at the bottom of the apparatus was filled with GdF₃ and MgF₂, the inside of the apparatus was evacuated to a pressure of 1 × 10⁻³ Pa and then the electron gun acceleration voltage was set to 6 kV and an MgF₂ film was formed while monitoring the film thickness and film formation speed using the crystal oscillator 7 so that the film formation speed was 5Å/s and the film thickness was 340Å.

Then, at the same acceleration voltage, a GdF₃ film was formed while monitoring the film thickness and film formation speed using the crystal oscillator 7 so that the film formation speed was 5Å/s and the film thickness was 287Å. Repeating the same procedure alternately, a thin film with a total of 24 layers was obtained.

After the film formation was completed, the quartz substrate 6 was taken out of the vacuum tank 2, its surface accuracy was measured using an interferometer. The result showed that the thin film of the substrate was deformed to have a concave surface and the stress on the substrate was calculated to be 0.2 x 10⁻⁹ GPa. This thin film was left standing in a constant temperature and constant humidity environment at a temperature of 60°C, humidity of 95% for 200 hours, the status of the thin film before and after leaving standing the thin film was visually checked and the result showed that no change such as cracking or peeling of the thin film was observed.

### [Example 2]

In Example 2, the quartz substrate 6 was placed in the same vacuum evaporator in FIG. 1 in Example 1 in the same way as for Example 1, the electron beam evaporation hearth 4 placed at the bottom was filled with LaF₃ and MgF₂ and the inside of the apparatus was evacuated to a pressure of 1 × 10⁻³ Pa. Then, the electron gun acceleration voltage was set to 6 kV and an MgF₂ film was formed under control while monitoring the film thickness and film formation speed using the crystal oscillator 7 so that the film formation speed was 5Å/s and the film thickness was 340Å. Then, at the same acceleration voltage, an LaF₃ film was formed under control while monitoring the film thickness and film formation speed using the crystal oscillator 7 so that the film formation speed was 5Å/s and the film thickness is 291Å. Repeating the same procedure alternately, a thin film with a total of 30 layers was obtained.

After the film formation is completed, the quartz substrate 6 was taken out of the vacuum tank 2, its surface accuracy was measured using the interferometer. The result showed that the thin film of the substrate was deformed to have a concave surface and the stress on the substrate was calculated to be 0.7 × 10⁻⁹ GPa. This thin film was left standing in a constant temperature and constant humidity environment at a temperature of 60°C, humidity of 95% for 200 hours, the status of the thin film before and after leaving standing the thin film was visually checked and the result showed that no change such as cracking or peeling of the thin film was observed.

### (Comparative example 1)

The quartz substrate 6 was placed in the same vacuum evaporator in FIG. 1 in Example 1 in the same way as for Example 1, the electron beam evaporation hearth 4 placed at the bottom was filled with Al₂O₃ and MgF₂ and the inside of the apparatus is evacuated to a pressure of 1 x 10⁻³ Pa.

Then, the electron gun acceleration voltage was set to 6 kV and an MgF₂ film was formed under control while monitoring the film thickness and film formation speed using the crystal oscillator 7 so that the film formation speed was 5Å/s and the film thickness was 340Å. Then, at the same acceleration voltage, an Al₂O₃ film was formed under control while monitoring the film thickness and film formation speed using the crystal oscillator 7 so that the film formation speed was 5Å/s and the film thickness was 284Å. Repeating the same procedure alternately, a thin film with a total of 30 layers was obtained.

After the film formation was completed, the quartz substrate 6 was taken out of the vacuum tank 2, its surface accuracy was measured using the interferometer. The result showed that the thin film of the substrate was deformed to have a concave surface and the stress on the substrate was calculated to be 2.7 × 10⁻⁹ GPa. This thin film was left standing in a constant temperature and constant humidity environment at a temperature of 60°C, humidity of 95% for 200 hours, the status of the thin film before and after leaving standing the thin film was visually checked and the result showed that some cracking and peeling of the thin film were observed.

### (Comparative example 2)

The quartz substrate 6 was placed in the same vacuum evaporator in FIG. 1 in Example 1 in the same way as for Example 1, the electron beam evaporation hearth 4 placed at the bottom was filled with LaF₃ and MgF₂ and the inside of the apparatus was evacuated to a pressure of 1 × 10⁻³ Pa.

Then, the electron gun acceleration voltage was set to 6 kV and an MgF₂ film was formed under control while monitoring the film thickness and film formation speed using the crystal oscillator 7 so that the film formation speed was 20Å/s and the film thickness was 340Å. Then, at the same acceleration voltage, an LaF₃ film was formed under control while monitoring the film thickness and film formation speed using the crystal oscillator 7 so that the film formation speed was 5Å/s and the film thickness was 284Å. Repeating the same procedure alternately, a thin film with a total of 30 layers was obtained.

After the film formation was completed, the quartz substrate 6 was taken out of the vacuum tank 2, its surface accuracy was measured using the interferometer. The result showed that the thin film of the substrate was deformed to have a concave surface and the stress on the substrate was calculated to be 1.8 × 10⁻⁹ GPa. This thin film was left standing in a constant temperature and constant humidity environment at a temperature of 60°C, humidity of 95% for 200 hours, the status of the thin film before and after leaving standing the thin film was visually checked and the result showed that some cracking and peeling of the thin film were observed.

FIG. 2 is a schematic view showing an example of the optical element 10 according to an embodiment of the present invention and it is the optical thin film of either aforementioned Example 1 or Example 2 formed on the quartz substrate 6. Reference numeral 8 denotes a low refractive index layer and 9 denotes a high refractive index layer. The substrate may be a flat plate, lens, prism or diffraction optical element.

As shown above, the thin film manufacturing method of the present invention can realize manufacturing of a thin film free of cracking or peeling, with excellent durability.

### <Embodiments of exposure device>

Then, an embodiment when the lens on which the optical thin film according to the present invention is formed is applied to an exposure device will be explained.

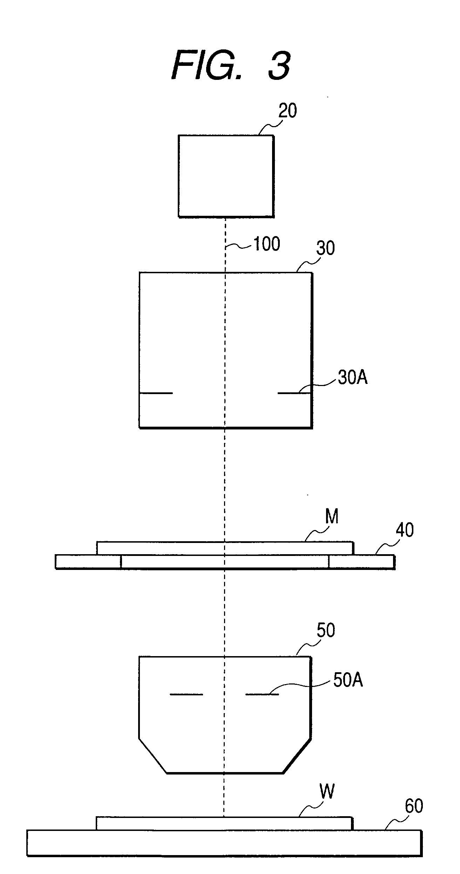

In FIG. 3, reference numeral 100 denotes an optical axis, 20 denotes a light source that emits light with a wavelength of approximately 157 nm in a vacuum ultraviolet region, 30 denotes an illumination optical system provided with an aperture 30A, 40 denotes a stage on which a reticule M is mounted, 50 denote a projection optical system provided with an aperture 50A and 60 denotes a stage on which a wafer W is mounted. Light from the light source 20 is irradiated onto the reticule M through the illumination optical system 30 and a device pattern image of the reticule M is projected onto the wafer W by the projection optical system.

At least one of the illumination optical system 30 and projection optical system 50 of the exposure device of this embodiment includes a lens on which the optical thin film according to the present invention is formed. By constructing the optical system with the lens, the exposure device of the present invention has excellent durability.

An example of applying the optical element of the present invention to the exposure device has been shown above, but the optical element of the present invention may also be applied to an image pickup device (camera, video, scanner, etc.), recording device (laser beam printer, etc.), etc., which makes it possible to realize an image pickup device or recording device free of cracking or peeling of the optical thin film, with excellent durability.

### <Embodiment of device manufacturing method>

Then, an embodiment of a method of manufacturing a device using the exposure device in FIG. 3 above will be explained.

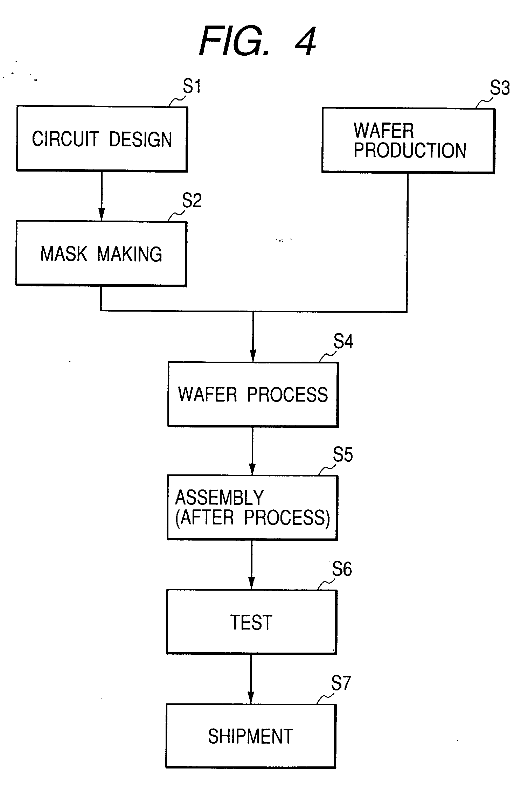

FIG. 4 shows a manufacturing flow of a semiconductor device (semiconductor chip such as IC and LSI, liquid crystal panel and CCD). In step 1 (circuit design), a semiconductor device circuit is designed. In step 2 (mask making), a mask (reticule) on which the designed circuit pattern is formed is made. On the other hand, in step 3 (wafer production), a wafer is produced using a material such as silicon. Step 4 (wafer process) is called "pre-process" in which an actual circuit is formed on the wafer using the mask and wafer prepared above according to a lithography technology. The next step 5 (assembly) is called "after process" in which a chip is made using the wafer created in step 4 and includes an assembly process (dicing, bonding), a packaging process (chip inclusion), etc. In step 6 (test), an operation check test and durability test, etc. of the semiconductor device created in step 5 are conducted. A semiconductor device is completed in these steps and shipped (step 7).

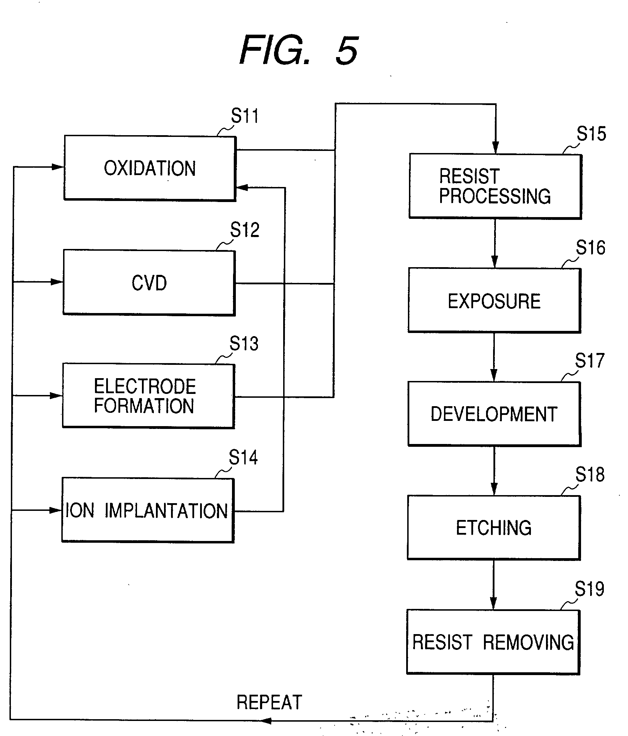

FIG. 5 shows a detailed flow of the above wafer process. In step 11 (oxidation), the surface of the wafer is oxidized. In step 12, an insulating coat is formed on the surface of the wafer. In step 13 (electrode formation), electrodes are formed on the wafer by means of vapor deposition. In step 14 (ion implantation), ions are implanted into the wafer. In step 15 (resist processing), a resist (sensitive material) is applied to the wafer. In step 16 (exposure), the wafer with the image of the circuit pattern of the mask is exposed by the above exposure device. In step 17 (development), the exposed wafer is developed. In step 18 (etching), the area other than the developed resist is removed. In step 19 (resist removing), the resist that becomes unnecessary after the etching is removed. By repeating these steps, a circuit pattern is formed on the wafer.

Using the manufacturing method of this embodiment makes it possible to manufacture a highly integrated device that has been difficult in the conventional arts.

Although the preferred embodiments have been illustrated and described, it will be obvious to those skilled in the art that various modifications may be made without departing from the scope of this invention.

## Claims

1. An optical element comprising:
a substrate; and
a thin film formed on said substrate,
wherein said thin film includes a layer containing a fluoride of lanthanoid and a layer containing a fluoride of other than lanthanoid.

2. The optical element according to claim 1,
wherein said fluoride of lanthanoid is one or both of GdF₃ or LaF₃.

3. The optical element according to claim 1 or 2,
wherein said fluoride of other than lanthanoid is MgF₂.

4. The optical element according to any one of claims 1 to 3,
wherein the material of said substrate is fluorite.

5. The optical element according to any one of claims 1 to 4,
wherein the film thickness of the layer containing said fluoride of lanthanoid is 600Å or less.

6. An optical element manufacturing method comprising:
a step of providing a substrate; and
a step of forming a thin film on said substrate,
wherein said step of forming a thin film includes a step of forming a layer containing a fluoride of lanthanoid and a step of forming a layer containing a fluoride of other than lanthanoid.

7. The optical element manufacturing method according to claim 6, wherein said fluoride of lanthanoid is one or both of GdF₃ or LaF₃.

8. The optical element manufacturing method according to claim 6, wherein the material of said fluoride of other than lanthanoid is MgF₂.

9. The optical element manufacturing method according to any one of claims 6 to 8, wherein the material of said substrate is fluorite.

10. The optical element manufacturing method according to any one of claims 6 to 9, wherein the layer containing said fluoride of lanthanoid is formed at a deposition speed of 15Å/s or less.

11. The optical element manufacturing method according to any one of claims 6 to 10, wherein the layer containing said fluoride of lanthanoid and the layer containing the fluoride of other than lanthanoid are formed by means of vapor deposition.

12. An exposure device comprising the optical element according to any one of claims 1 to 5.

13. A device manufacturing method comprising:
a step of exposing a wafer using the exposure device according to claim 12; and
a step of developing said exposed wafer.
